# EUROPÄISCHE PATENTSCHRIFT

(11) **EP 2 812 114 B1**
(45) Veröffentlichungstag und Bekanntmachung des Hinweises auf die Patenterteilung: **13.12.2023**
(21) Anmeldenummer: 13708073.5
(22) Anmeldetag: 08.02.2013
(51) Int. Cl.: B01J 23/89, B01J 23/42, B01J 23/44, B01J 23/52, B01J 23/50, B01J 23/62, B01J 23/652, B01J 23/656, B01J 21/18, B01J 35/08, B01J 37/08, H01M 4/00

(54) **VERWENDUNG VON MESOPORÖSEN GRAPHITISCHEN TEILCHEN FÜR ELEKTROCHEMISCHE ANWENDUNGEN**
USE OF MESOPOROUS GRAPHITE PARTICLES FOR ELECTROCHEMICAL APPLICATIONS
UTILISATION des NANOPARTICULES MÉTALLIQUES HAUTEMENT STABLES AU FRITTAGE SUPPORTÉES PAR DES PARTICULES GRAPHITIQUES MÉSOPOREUSES

(30) Priorität: 08.02.2012 EP 12154508; 13.03.2012 DE 102012102120
(43) Veröffentlichungstag der Anmeldung: 17.12.2014
(73) Patentinhaber: Studiengesellschaft Kohle gGmbH, 45470 Mülheim an der Ruhr (DE)
(72) Erfinder: SCHÜTH, Ferdi, 45470 Mülheim an der Ruhr (DE); GALEANO NUNEZ, Diana Carolina, 68163 Mannheim (DE); PEINECKE, Volker, 45472 Mülheim an der Ruhr (DE); MAYRHOFER, Karl, J., J, 40237 Düsseldorf (DE); MEIER, Josef, 81476 München (DE); MARIAPPAN, Sakthivel, 60486 Frankfurt/Main (DE); TESFU, Tadios, 60389 Frankfurt/Main (DE)
(86) Internationale Anmeldenummer: PCT/DE2013/100046
(87) Internationale Veröffentlichungsnummer: WO 2013/117192

(56) Entgegenhaltungen:
- US-A1- 2006 166 811
- US-A1- 2006 263 288
- GUANG-HUI WANG ET AL: "Weak Acid-Base Interaction Induced Assembly for the Synthesis of Diverse Hollow Nanospheres", CHEMISTRY OF MATERIALS, Bd. 23, Nr. 20, 25. Oktober 2011 (2011-10-25), Seiten 4537-4542, XP055058692, ISSN: 0897-4756, DOI: 10.1021/cm2018168
- AN-HUI LU ET AL: "Easy Synthesis of Hollow Polymer, Carbon, and Graphitized Microspheres", ANGEWANDTE CHEMIE. INTERNATIONAL EDITION, WILEY VCH VERLAG, WEINHEIM, Bd. 49, Nr. 9, 22. Februar 2010 (2010-02-22), Seiten 1615-1618, XP009168564, ISSN: 1433-7851 [gefunden am 2010-01-29]
- SHUAI WANG ET AL: "Temperature-Programmed Precise Control over the Sizes of Carbon Nanospheres Based on Benzoxazine Chemistry", JOURNAL OF THE AMERICAN CHEMICAL SOCIETY, Bd. 133, Nr. 39, 5. Oktober 2011 (2011-10-05), Seiten 15304-15307, XP055058693, ISSN: 0002-7863, DOI: 10.1021/ja206333w
- CAROLINA GALEANO ET AL: "Toward Highly Stable Electrocatalysts via Nanoparticle Pore Confinement", JOURNAL OF THE AMERICAN CHEMICAL SOCIETY, Bd. 134, Nr. 50, 19. Dezember 2012 (2012-12-19), Seiten 20457-20465, XP055058691, ISSN: 0002-7863, DOI: 10.1021/ja308570c
- JIANMING ZHAO ET AL: "A Template-Free and Surfactant-Free Method for High-Yield Synthesis of Highly Monodisperse 3-Aminophenol-Formaldehyde Resin and Carbon Nano/Microspheres", MACROMOLECULES, Bd. 46, Nr. 1, 8. Januar 2013 (2013-01-08) , Seiten 140-145, XP055058695, ISSN: 0024-9297, DOI: 10.1021/ma302119t
- Carolina Galeano ET AL: "Toward Highly Stable Electrocatalysts via Nanoparticle Pore Confinement", Journal of the American Chemical Society, vol. 134, no. 50, 19 December 2012 (2012-12-19), pages 20457-20465, XP055058691, ISSN: 0002-7863, DOI: 10.1021/ja308570c
- JAYAPRAKASH N ET AL: "Porous Hollow Carbon@Sulfur Composites for High-Power Lithium-Sulfur Batteries", ANGEWANDTE CHEMIE, WILEY - V C H VERLAG GMBH & CO. KGAA, DE, vol. 123, no. 26, 17 May 2011 (2011-05-17) , pages 6026-6030, XP071348061, ISSN: 0044-8249, DOI: 10.1002/ANGE.201100637

## Beschreibung

Die vorliegende Erfindung betrifft die Verwendung von mesoporösen graphitischen Teilchen, die eine Beladung von sinterstabilen Metall-Nanoteilchen aufweisen, für Brennstoffzellen und weitere elektrochemische Anwendungen, beispielsweise als Bestandteil von elektrochemisch aktiven und passiven Schichten bei Elektroden von Batterien, PEM-Brennstoffzellen oder von elektrochemischen Elementen und elektrochemischen Energiewandlern.

Im Stand der Technik sind mehrere Veröffentlichungen über Kohlenstoffmaterialien als Träger für katalytisch aktive Metalle für elektrochemische Anwendungen bekannt.

Beispielhaft wurde in Chem. Mater. 2011, 23, 4537-4542, eine neuartige und verallgemeinerbare hydrothermale Synthese für verschiedene hohle Nanokugeln, die die Polymer-, Kohlenstoff-, Graphitkohlenstoff- und metalldotierte Kohlenstoffhohlkugeln Nanokugeln umfassen, und Optionen für elektrochemische Anwendungen beschrieben.

In ANGEWANDTE CHEMIE. INTERNATIONAL EDITION, WILEY VCH VERLAG, WEINHEIM, Bd. 49, Nr. 9, 22. Februar 2010 (2010-02-22), Seiten 1615-1618, wird neuer Ansatz für eine Synthese beschrieben, die so eingestellt werden kann, dass sie entweder mikrometergroße hohle Polymer-, Kohlenstoff- oder graphitierte Hohlkugeln zu erhalten. Die Synthese soll leicht skalierbar sein, um große Mengen an Produkt mit hoher Reinheit, die sich für elektrochemische Anwendungen eignen sollen, zu erhalten.

Allerdings sind die Materialien in Bezug auf ihre Lebensdauer noch nicht ganz zufriedenstellend. Dementsprechend besteht ein Bedarf an verbesserten Materialien für die Verwendung in elektrochemischen Prozessen, insbesondere auf dem Gebiet der PEMFCs.

Die im Rahmen der vorliegenden Erfindung beschriebenen mesoporösen graphitischen Teilchen und deren Herstellung sind in der europäischen Patentanmeldung mit der Anmeldenummer 2012/154508 vom 8. Februar 2012 beschrieben, deren Zeitrang hier in Anspruch genommen wird.

Wie dort beschrieben, sind die mesoporösen graphitischen Teilchen mit einer Beladung aus sinterstabilen Metall-Nanoteilchen über ein Verfahren erhältlich, bei dem
- Teilchen mit einem mesoporösen Grundgerüst mit einer graphitisierbaren/karbonisierbaren organischen Verbindung, vorzugsweise in Lösung, imprägniert werden,
- die so erhaltenen Teilchen einem Hochtemperaturgraphitisierungsschritt unterworfen werden, um ein graphitisches Gerüst in dem porösen Grundgerüst auszubilden,
- die so erhaltenen graphitisierten Teilchen einem Verfahren unterworfen werden, um das Grundgerüst zu entfernen und dabei ein mesoporöses graphitisches Gerüst zu erhalten, die sogenannten n-HGS-(Hollow-Graphitic-Speres)-Teilchen,
- die so erhaltenen mesoporösen graphitischen Teilchen (n-HGS Teilchen) mit einer Lösung eines katalytisch aktiven Metallsalzes wie Ti, V, Cr, Mn, Fe, Co, Ni, Cu, Zn, Al, Mo, Se, Sn, Pt, Ru, Pd, W, Ir, Os, Rh, Nb, Ta, Pb, Bi, Au, Ag, Sc, Y, und Mischungen davon imprägniert werden, wobei das Volumen der Lösung des Metallsalzes vollständig in den Poren der mesoporösen graphitischen Teilchen absorbiert wird,
- die so erhaltenen mesoporösen graphitischen Teilchen einem Hydrierungsschritt unterzogen werden, um die katalytisch aktiven Metallteilchen auf und oder in den Poren der mesoporösen Teilchen zu erhalten, und
- die so erhaltenen mesoporösen graphitischen Teilchen mit der Metallbeladung in einem Temperaturbereich von 600°C bis 1000°C kalziniert werden..

Verfahrensgemäß werden die Metallsalze zu den Metallen reduziert, was chemisch in Gegenwart von Wasserstoff erfolgt
Dem schließt sich bei dem Herstellungsverfahren erfindungsgemäß ein weiterer Schritt an, bei dem die so erhaltenen mesoporösen graphitischen Teilchen mit der Metallbeladung in einem Temperaturbereich vorzugsweise von 600°C bis 1000°C kalziniert werden, um insbesondere die Teilchen und die katalytisch aktiven Metalle zu stabilisieren.

Die in dem erfindungsgemäßen Verfahren einsetzbaren Teilchen mit einem porösen Grundgerüst können einen festen Kern und eine poröse Hülle oder eine poröse Struktur im ganzen Teilchen besitzen, so dass nach Entfernen des Grundgerüstes und nach Graphitisieren der organischen Verbindung Teilchen mit einem hohlen Kern und einer porösen Hülle oder ein Teilchen mit einer porösen Struktur insgesamt gebildet werden.

Die dabei eingesetzten Teilchen haben in der Regel Mesoporen mit einer Größe von 2 bis 50 nm, in denen im Graphitisierungsschritt das graphitische Netzwerk ausgebildet wird. Es ist dabei möglich, dass Kern und poröse Hülle der eingesetzten Teilchen aus unterschiedlichen Materialien zusammen gesetzt sein können. Z. B. kann der Kern ein polymeres organisches oder anorganisches Material sein, der von einer porösen Schicht eines anorganischen Materials wie Silika, Zirkoniumdioxid, Titania oder hydratisierten Vorläufern umgeben ist.

Die einsetzbare graphitisierbare/karbonisierbare organische Verbindung ist nicht besonders auf bestimmte Stoffgruppen eingeschränkt, solange der Graphitisierungsprozess, der üblicherweise bei erhöhten Temperaturen von mehr als 600°C in einer sauerstofffreien Atmosphäre ausgeführt wird, zu einer graphitischen Netzwerkstruktur innerhalb des porösen Grundgerüstes des Teilchens führt, und kann ein polymerisierbares Kohlenwasserstoffmonomer wie die Vinylverbindung wie z.B. Vinylbenzol oder eine Kombination von wenigstens zwei organischen, harzbildenden Verbindungen wie Resorcin/Formaldehyd, Mesophase - Pitch oder anderen Monomeren von Polymeren sein, die eine hohe Kohlenstoffausbeute beim Karbonisierungsprozess ergeben.

Die erfindungsgemäß besonders vorteilhaften hohlen graphitischen Kugeln (hollow graphitic spheres - HGS) können vorteilhaft durch "Nanocasting" von Silikateilchen mit einem festen Kern und einer mesoporösen Hülle hergestellt werden. Diese Silikateilchen können dadurch hergestellt werden, dass man wenigstens eine hydrolysierbare Siliziumverbindung in Gegenwart wenigstens eines porenbildenden Mittels wie einer Kohlenwasserstoff-Silizium-Verbindung umsetzt, um Teilchen mit einem SiO₂-Vorläufer-Gerüst zu bilden, die so erhaltenen Teilchen trocknet und kalziniert, um die gewünschten Silikateilchen mit einer mesoporösen Hülle zu erhalten. Dabei ist die hydrolysierbare Siliziumverbindung vorzugsweise eine Siloxanverbindung wie Tetraalkoxysilan, die zu einem SiO₂-Vorläufer-Gerüst hydrolysiert werden kann, wobei dieses Gerüst ggf. Hydroxylgruppen aufweist, die während der Kalzinierung in Si-O-Si-Bindungen umgewandelt werden können.

Diese Hydrolysierung kann vor der Zugabe der Kohlenwasserstoff-Silizium-Verbindung gestartet werden, um ein SiO₂-Vorläufer-Grundgerüst zu erhalten, das dann in Gegenwart der Kohlenwasserstoff-Silizium-Verbindung umgesetzt werden kann, um das SiO₂-Vorläufer-Grundgerüst zu erhalten. Diese Kohlenwasserstoff-Silizium-Verbindung wird zum Zwecke eingesetzt, um Nanoporen während des nachfolgenden Kalzinierungsschrittes zu erzeugen, und ist im Allgemeinen eine Siliziumverbindung mit wenigstens einer langketteigen C₁₀-C₃₀-Alkylgruppe, die an Silizium gebunden ist. Solche Teilchen mit einem festen SiO₂-Kern und einer mesoporösen Hülle darum haben im Allgemeinen einen Durchmesser von 100 nm bis 600 nm, wobei die Hülle 20 nm bis 80 nm dick ist. Entsprechend kann der feste SiO₂-Kern einen Durchmesser im Bereich von 60 nm bis 450 nm besitzen. Vorzugsweise ist der Durchmesser des festen Kerns im Bereich von 200 nm bis 400 nm und die Dicke der Hülle um den Kern beträgt 20 nm bis 50 nm.

Die so erhaltenen mesoporösen Siliziumdioxidteilchen werden mit einer Lösung eines Metallsalzes als Graphitisierungskatalysator behandelt, wobei vorzugsweise das gesamte Porenvolumen der mesoporösen Hülle der Teilchen mit einem Metallsalz als Graphitisierungskatalysator imprägniert wird, wobei das Metallsalz im Allgemeinen auf das Monomer abgestimmt wird, das zum Füllen der Mesoporen im nächsten Schritt verwendet wird. Für einige Anwendungen ist es erforderlich, dass das Metallsalz, insbesondere bei Fe-Salzen als "Degradationskatalysator" bzgl. des Polymerabbaus bei der späteren Verwendung in der elektrochemischen Anwendung, komplett inertisiert oder anschliessend vollständig ausgewaschen wird.

Die nach dem Verfahren erhältlichen hohlen graphitisierten Kugeln mit einem hohlen Kern und einer mesoporösen Hülle haben in der Regel einen Durchmesser im Bereich von 60 nm bis 440, oder bis zu 560 nm, und die Schichtdicke der Hülle beträgt in der Regel 20 nm bis 50 nm. Die HGS-Teilchen haben im Allgemeinen eine bimodale Porengrößenverteilung bestimmt mit der BJH Methode mit der Hauptverteilung zwischen 2 und 6 nm, vorzugsweise zwischen 3 und 4 nm, und der zweiten Porengrößenverteilung zwischen 6 und 20 nm, besonders zwischen 8 und 12 nm.

Die so erhaltenen HGS-Teilchen zeigen die Eigenschaften einer erhöhten Temperaturstabilität von 600°C bis 700°C, wobei 40 % der graphitischen Domänen sogar bis zu 800 °C temperaturstabil sind. Die BET-Oberfläche beträgt mehr als 1000 m² pro Gramm, insbesondere mehr als 1400 m² pro Gramm und der Restgehalt an Metall beträgt weniger als 0,5 Gew.-%, bevorzugt ist der Restgehalt so weit (entweder ppm-Bereich oder durch "vollständige Einkapselung") herabgesetzt, dass keine katalytischen Effekte mehr von diesem Metall oder dessen Salz ausgehen können.

Diese n-HGS-Teilchen können dann mit einer Lösung eines Metallsalzes eines katalytisch aktiven Metalls wie Ti, V, Cr, Mn, Fe, Co, Ni, Cu, Zn, Al, Mo, Se, Sn, Pt, Ru, Pd, Au, Ag, W, Ir, Os, Rh, Nb, Ta, Pb, Bi, Y, Sc, Au, Ag, Sc, Y sowie Mischungen oder Kombinationen davon wie oben beschrieben, vorzugsweise mittels eines Imprägnierungsschrittes behandelt werden, wobei, wie oben erwähnt, das Volumen der vorzugsweise alkoholischen Lösung des Metallsalzes vollständig in den Poren der HGS-Teilchen absorbiert wird, um die Vorläufer-M-HGS-Teilchen zu bilden. Im nächsten Schritt werden nach Trocknung bzw. nach Verdunstung des Lösemittels die so erhaltenen Vorläufer-M-HGS-Teilchen einem Hydrierungsschritt mit Wasserstoff bei einer erhöhten Temperatur zwischen 200°C und 400°C über einen Zeitraum von bis zu 10 Stunden unterworfen, um die Metall-HGS-Teilchen (M-HGS-Teilchen) zu erhalten und flüchtige Reaktionsprodukte der Metallsalze wie Halogenwasserstoff zu entfernen.

Die Metall-Nanoteilchen sind in hoher Konzentration homogen über die Oberfläche innerhalb des Porensystems der M-HGS-Teilchen verteilt, und die definierte Mesoporosität mit Poren von 2 bis 6 nm und die große Oberfläche der graphitischen Hüllen erlauben nicht nur die Ausbildung der metallischen Nanoteilchen im Porensystem, sondern führen ebenso zu einer hohen Beladung der Metallnanoteilchen mit einheitlichen Größenverteilungen und einer hohen Stabilität gegen Koaleszenz. Die Metallbeladung liegt vorzugsweise in einem Bereich von 10 Gew.-% bis 40 Gew.-%, bisweilen auch von 5 Gew.-% bis hinauf zu 50 Gew.-%, bezogen auf das Gesamtgewicht an HGS-Teilchen.

Vorteilhaft schließt sich eine Behandlung an, bei dem die Metall-HGS-Teilchen über einen Zeitraum bis zu mehreren Stunden im Temperaturbereich von 600° bis 1000°C calciniert werden, um die Stabilität der Metall-Nanopartikel zu erhöhen.

Die letztendlich so erhaltenen mesoporösen graphitischen Teilchen mit einer Beladung von Metallnanopartikeln, im Folgenden auch M-HGS-Teilchen genannt, , haben insbesondere in den Poren der mesoporösen Hüllstruktur eine große aktive Oberfläche, ein niedriges Anfangspotential ("oxygen reduction onset potential") für die Sauerstoffreduktion und eine Grenzstromdichte vergleichbar den aus dem Stand der Technik bekannten Metall-beladenen Vulkan-Teilchen (kommerzielle Elektrokatalysatoren).

Diese Eigenschaften machen das so gemäß der o.a. EP 12154508 herstellbare Material besonders geeignet für die Verwendung in elektrochemischen Anwendungen. Insbesondere bei Brennstoffzellen machen sowohl die Oxidation von Wasserstoff und von kleinen organischen Brennstoffmolekülen, wie ggf. auch von NH₃, N₂H₄, an der Anode als auch die Reduktion von Sauerstoff an der Kathode eine effektive Elektrokatalyse erforderlich, um Stromdichten und Spannungen zu erhalten, die für praktische Anwendungen erforderlich sind. Für diese Anwendung in Brennstoffzellen sind insbesondere die folgenden Eigenschaften der M-HGS-Materialien von Vorteil:
- Die große spezifische Oberfläche führt zu einer erhöhten Kapazität für die Aufnahme von Reaktanden sowie zu vielen Ankerplätzen für die abzuscheidenden Katalysatorpartikel...).
- Die kleinen Poren innerhalb der Hüllschicht erhöhen die Stabilität der Katalysatorpartikel durch "Einfangen/Festhalten" derselben.
- Die Materialien weisen eine gute elektrische Leitfähigkeit, eine gute thermische Leitfähigkeit zum Abtransport von Abwärme und hervorragende Korrosionsbeständigkeit auf.
- Aufgrund der Porosität ist ein effizienter Wasser- und Sauerstofftransport und weiterer fluider Stoffe wie Wasser, Wasserdampf, Ammoniak, Methanol sowie von Protonen (H⁺) und - für andere Anwendungen - auch Hydroxid-Ionen (OH⁻) in und durch die Teilchen möglich.
- Die Oberflächenstruktur erlaubt eine gute Benetzbarkeit der Partikeloberflächen mit dem Elektrolyten innerhalb der Katalysatorschicht einer Elektrode, was wiederum eine gute Zugänglichkeit der katalytisch aktiven Spots innerhalb der Partikelhüllschicht ermöglicht.
- Die mechanische Stabilität der Materialien erlaubt eine gute Verarbeitbarkeit, unter anderem beim Verpressen der Membranelektrodeneinheit aus Anode, Membran und Kathode.

Aufgrund der engen Partikelgrößenverteilung sind homogenere Schichtstrukturen als mit Standardmaterialien wie auf dem im Handel erhältlichen Vulcan XC72 basierenden Elektrokatalysatoren erzielbar, wobei die HGS-Schichtstrukturen regelmäßig sind und eine bessere Definition der Schichtstrukturen ermöglichen. Dies führt zu einer verbesserten Verarbeitbarkeit infolge schnellerer Herstellung homogener Schichten zu kostengünstigeren Bedingungen. Aufgrund der porösen Hüllstruktur ist eine bessere Zugänglichkeit der katalytisch-aktiven Spots in den Poren gegeben, was bspw. kathodenseitig zu einer verbesserten Versorgung der Katalysatorpartikel mit Protonen (H⁺) und Sauerstoff (O₂) bzw. zu besserer Katalysatorausnutzung führt, so dass bei verringerter Menge an aktiven Metall bei gleicher Leistungsfähigkeit auch dünnere Schichten möglich sind. Dies ermöglicht eine Kosteneinsparung durch geringeren Edelmetallverbrauch.

Aufgrund der Struktur der Teilchen mit hohlem Kern und poröser Hülle ist zudem eine Verbesserung des Stofftransports in der Katalysatorschicht, die als 3 Phasen üblicherweise neben dem Leervolumen (P1: Gas- und Wassertransport) HGSbasierte Katalysatorpartikel (P2: Strom- und Wärmetransport sowie katalytische Aktivität) und Membranpolymer (P3: Protonentransport) enthält, möglich. Gas und Flüssigkeit können neben den "Kugelzwischenräumen" zusätzlich durch das Innere der Kugeln und damit insgesamt besser diffundieren und zu/von den Reaktionszentren zu- bzw. abtransportiert werden.

Über die Kugelhülle kann der Elektronentransport von Kugel zu Kugel erfüllen, während der Gastransport innen durch die porösen Hüllen und die Hohlräume von Kugel zur benachbarten Kugel erfolgen kann. Der Ionen- bzw. Ladungstransport kann dabei im die Kugeln umgebenden Polymernetzwerk erfolgen, und so kann bei dichter "Kugelpackung", anders als bei "massiven" Standardmaterialien möglich, ggf. eine vollständige Flutung bzw. Füllung der Zwischenräume zwischen den Kugeln mit Polymer-Netzwerk erfolgen, was zu einer Erhöhung der ionischen Leitfähigkeit und der mechanischen Stabilität der Katalysatorschicht führt. Letztendlich resultiert daraus eine verbesserte ionische Versorgung der Katalysatorpartikel (resultierend in einer besseren Katalysatorausnutzung) und dadurch eine Erhöhung der Leistungsfähigkeit der Katalysatorschicht.

Seitens der Erfinder wurde herausgefunden, dass die erfindungsgemäße Verwendung der M-HGS-Teilchen zu einer hohen Leistung auch dickerer Katalysatorschichten (d_{KS} > 50 µm) führt, was mit dem im Stand der Technik bekannten Material nicht möglich ist. Entsprechend ist die Reduzierung der Dicke der Katalysatorschicht und folglich der Menge des Katalysators bei im Vergleich zum Stand der Technik gleichbleibender Leistung möglich.

Aufgrund der Größe der M-HGS-Teilchen bzw. der Leistungsfähigkeit auch dickerer Katalysatorschichten ist es bei geeigneter Wahl des Polymernetzwerkes möglich, die MPL-Schicht auf der Gasdiffusionsschicht (GDL) wegzulassen und die Katalysatorschicht in dem Polymernetzwerk direkt auf die GDL-Schicht aufzubringen, um eine GDE zu erzeugen, die nur aus zwei statt der üblicherweise verwendeten drei Teilschichten besteht. Dabei können die der Katalysatorschicht zugewandten, oberflächennahen Poren der GDL-Schicht durch die Katalysatorschicht selbst teilweise aufgefüllt werden, und so kann eine feste Haftung der Katalysatorschicht auf der GDL-Schicht erzielt werden.

Neben der erfindungsgemäßen Verwendung der HGS-Partikel in Niedertemperatur- oder Mitteltemperatur-Polymer-Elektrolyt-Membran-Brennstoffzellen (NT- und MT-PEMFC) und solchen als Hochtemperaturvarianten mit Phosphorsäure (HT-PEMFC) ist die Verwendung der HGS-Partikel ebenso in Direkt-Methanol-Brennstoffzellen (DMFC) als Anode bzw. als Kathode möglich, was im Verhältnis zu dem im Stand der Technik bekannten Material zu einem verbesserten Transport von Sauerstoff, Wasser als auch von Methanol und Kohlendioxid (anodenseitiges Produkt) führt und gleichzeitig eine bessere Korrosionsbeständigkeit mit sich bringt.

Ebenso können die erfindungsgemäßen Materialien bei der Elektrolyse für die Kathode (H₂-Seite) oder bei einem elektrochemischen Methanolreformer für die Kathode (H₂-Seite) bzw. für Anode (Methanol-Seite) und Kathode (H₂-Seite) verwendet werden.

Grundsätzlich eignen sich die n-HGS-Teilchen auch als Bestandteile bei Lithium-Ionen- und Lithium-Schwefel-Batterien, insbesondere der Elektroden. Der geringere Partikeldurchmesser und die hohe elektrische Leitfähigkeit ermöglichen zum Einen den Einsatz als Leitfähigkeitsadditiv, darüber hinaus können die Teilchen als Bestandteile der Beschichtung auf Anode bzw. der Kathode verwendet werden. Insbesondere bei Lithium-Ionen-Batterien sind im Forschungsstadium siliziumbasierte Anoden im Einsatz, die aufgrund der hohen theoretischen Kapazität des Siliziums von 4000 mAh/g Gegenstand intensiver Forschung sind. Allerdings entstehen aufgrund der Volumenausdehnung des Siliziums bei der Einlagerung der Lithium-Atome im Kristallgitter mechanische Spannungen, die die Si-Kristallite zerstören. Bei Verwendung von M-HGS-Teilchen bzw. Si-HGS-Teilchen sind mit im hohlen Kern eingebundenen Siliziumkristalliten Lithiumbatterie-Anoden möglich, die gegenüber den im Stand der Technik bekannten Si-Kompositen in Anoden eine erhöhte Zyklenstabilität aufweisen.

Ferner ist die Verwendung der M-HGS-Teilchen für Metall-Luft-Batterien bzw. Metall-Luft-Brennstoffzellen sowohl bei primären Zellen als auch sekundären Zellen erfindungsgemäß gegeben. Dabei können die HGS-Teilchen zur Steigerung der katalytischen Aktivität bzw. des Stofftransports in der Luftelektrode eingesetzt werden.

Aus alledem wird ersichtlich, dass die HGS-Teilchen erfindungsgemäß für eine Vielzahl von Anwendungen im Bereich der Elektrochemie bzw. der elektrochemischen Energiewandler verwendet werden können. Diese Verwendbarkeit wird insbesondere durch die Eigenschaften der HGS-Materialien in Bezug auf die hohe spezifische Oberfläche, Hohlheit bzw. Porosität (Kugelinneres, Kugelschale), gute elektrische Leitfähigkeit, gute thermische Leitfähigkeit, hervorragende Korrosionsbeständigkeit und gute Benetzbarkeit ermöglicht, Weiterhin ist die Quasi-Monodispersität bei einstellbarem mittleren Kugeldurchmesser und enger Partikelgrössenverteilung ein Vorteil. Darüber hinaus ergibt sich auch aufgrund der Gestalt der Teilchen als Hohlkugeln eine erhöhte mechanische Festigkeit, die insbesondere bei Aufbringen von Schichten und Pressvorgängen von Vorteil ist, da die Partikel unter der mechanischen Belastung nicht zerbrechen.

## Patentansprüche

1. Verwendung von mesoporösen graphitischen Teilchen mit einer Beladung von sinterstabilen Metall-Nanoteilchen (M-HGS) in der interkonnektierten 3D Porenstruktur als Katalysator in elektrochemischen Anwendungen, wobei die Teilchen eine Hohlkugelstruktur mit einer mesoporösen graphitischen Hülle mit einer Schichtdicke von 20 nm bis 50 nm und einen hohlen Kern mit einem Durchmesser von 60 nm bis 440 nm, besonders bis zu 560 nm, haben, und die Beladung der mesoporösen graphitischen Hülle mit katalytisch aktivem Metall, ausgewählt aus Ti, V, Cr, Mn, Fe, Co, Ni, Cu, Zn, Al, Mo, Se, Sn, Pt, Ru, Pd, W, Ir, Os, Rh, Nb, Ta, Pb, Bi, Au, Ag, Sc, Y, Kombinationen davon und insbesondere edelmetallbasierten Legierungen davon, 5 - 50 Gew.-%, insbesondere 10 bis 40 Gew.-%, bezogen auf das Gesamtgewicht der metallbeladenen Teilchen beträgt,
wobei die mesoporösen graphitischen Teilchen mit einer Beladung aus sinterstabilen Metall-Nanoteilchen über ein Verfahren erhältlich sind, bei dem
- Teilchen mit einem mesoporösen Grundgerüst mit einer graphitisierbaren/karbonisierbaren organischen Verbindung imprägniert werden,
- die so erhaltenen Teilchen einem Hochtemperaturgraphitisierungsschritt unterworfen werden, wobei ein graphitisches Gerüst in dem porösen Grundgerüst ausgebildet wird,
- die so erhaltenen graphitisierten Teilchen einem Schritt zur Entfernung des Grundgerüstes unterworfen werden, wobei ein mesoporöses graphitisches Gerüst erhalten wird,
- die so erhaltenen mesoporösen graphitischen Teilchen mit einer Lösung eines katalytisch aktiven Metallsalzes wie Ti, V, Cr, Mn, Fe, Co, Ni, Cu, Zn, Al, Mo, Se, Sn, Pt, Ru, Pd, W, Ir, Os, Rh, Nb, Ta, Pb, Bi, Au, Ag, Sc, Y, und Mischungen davon imprägniert werden, wobei das Volumen der Lösung des Metallsalzes vollständig in den Poren der mesoporösen graphitischen Teilchen absorbiert wird,
- die so erhaltenen mesoporösen graphitischen Teilchen einem Hydrierungsschritt unterzogen werden, wobei die katalytisch aktiven Metallteilchen auf und/oder in den Poren der mesoporösen Teilchen erhalten werden, und
- die so erhaltenen mesoporösen graphitischen Teilchen mit der Metallbeladung in einem Temperaturbereich von 600°C bis 1000°C kalziniert werden.

2. Verwendung von mesoporösen graphitischen Teilchen nach Anspruch 1, wobei die Teilchen eine Beladung der mesoporösen graphitischen Hülle mit katalytisch aktivem Metall, ausgewählt aus Pt mit mindestens einem von Fe, Co, Ni, Cu, Ru, Pd, Au, Ag, Sn, Mo, Mn, Y, Sc aufweist.

3. Verwendung der mesoporösen graphitischen Teilchen mit einer Beladung von sinterstabilen Metall-Nanoteilchen nach Anspruch 1 oder 2 als Bestandteil von Elektroden in elektrochemischen Zellen.

4. Verwendung der mesoporösen graphitischen Teilchen mit einer Beladung von sinterstabilen Metall-Nanoteilchen nach Anspruch 1 oder 2 als Oxidationskatalysator (Anode) in elektrochemischen Zellen, insbesondere Brennstoffzellen.

5. Verwendung der mesoporösen graphitischen Teilchen mit einer Beladung von sinterstabilen Metall-Nanoteilchen nach Anspruch 1 oder 2 als Reduktionskatalysator (Kathode) elektrochemischer Zellen (Kathode), insbesondere in Brennstoffzellen.

6. Verwendung nach einem der Ansprüche 1 - 5, wobei die elektrochemische Anwendung die Verwendung als Schichtbestandteil im Schichtaufbau einer Membran-Elektroden-Einheit (MEA) einer Brennstoffzelle, elektrochemischen Zellen wie Elektrolysezellen, elektrochemischen Reformern und als Bestandteil von Elektrodenschichten von Batterien umfasst.

## Claims

1. Use of mesoporous graphitic particles having a loading of sinter-stable metal nanoparticles (M-HGS) in the interconnected 3D pore structure as catalyst in electrochemical applications, wherein the particles have a hollow sphere structure with a mesoporous graphitic shell with a layer thickness of 20 nm to 50 nm and a hollow core with a diameter of 60 nm to 440 nm, especially up to 560 nm, and the loading of the mesoporous graphitic shell with catalytically active metal selected from Ti, V, Cr, Mn, Fe, Co, Ni, Cu, Zn, Al, Mo, Se, Sn, Pt, Ru, Pd, W, Ir, Os, Rh, Nb, Ta, Pb, Bi, Au, Ag, Sc, Y, combinations thereof and in particular noble metal-based alloys thereof, is 5-50 % by weight, in particular 10 to 40 % by weight, based on the total weight of the metal-loaded particles,
wherein the mesoporous graphitic particles are obtainable having a loading of sinter-stable metal nanoparticles via a process in which
- particles with a mesoporous backbone are impregnated with a graphitizable/carbonitizable organic compound,
- the particles thus obtained are subjected to a high-temperature graphitisation step, forming a graphitic framework in the porous backbone,
- the graphitised particles thus obtained are subjected to a base removal step, obtaining a mesoporous graphitic framework,
- the mesoporous graphitic particles thus obtained are impregnated with a solution of a catalytically active metal salt such as Ti, V, Cr, Mn, Fe, Co, Ni, Cu, Zn, Al, Mo, Se, Sn, Pt, Ru, Pd, W, Ir, Os, Rh, Nb, Ta, Pb, Bi, Au, Ag, Sc, Y, and mixtures thereof, the volume of the solution of the metal salt being completely absorbed in the pores of the mesoporous graphitic particles,
- the mesoporous graphitic particles thus obtained are subjected to a hydrogenation step, whereby the catalytically active metal particles are obtained on and/or in the pores of the mesoporous particles, and
- the mesoporous graphitic particles thus obtained are calcined with the metal loading in a temperature range of 600°C to 1000°C.

2. The use of mesoporous graphitic particles according to claim 1, wherein the particles comprise a loading of the mesoporous graphitic shell with catalytically active metal selected from Pt with at least one of Fe, Co, Ni, Cu, Ru, Pd, Au, Ag, Sn, Mo, Mn, Y, Sc.

3. Use of the mesoporous graphitic particles having a loading of sinter-stable metal nanoparticles according to claim 1 or 2 as a component of electrodes in electrochemical cells.

4. Use of the mesoporous graphitic particles having a loading of sinter-stable metal nanoparticles according to claim 1 or 2 as oxidation catalyst (anode) in electrochemical cells, in particular fuel cells.

5. Use of the mesoporous graphitic particles having a loading of sinter-stable metal nanoparticles according to claim 1 or 2 as a reduction catalyst (cathode) of electrochemical cells (cathode), in particular in fuel cells.

6. Use according to any one of claims 1-5, wherein the electrochemical application comprises use as a layer component in the layer structure of a membrane electrode assembly (MEA) of a fuel cell, electrochemical cells such as electrolysis cells, electrochemical reformers and as a component of electrode layers of batteries.

## Revendications

1. Utilisation de particules graphitiques mésoporeuses comportant une charge de nanoparticules métalliques stables au frittage (M-HGS) dans la structure poreuse 3D interconnectée comme catalyseur dans des applications électrochimiques, les particules ayant une structure de billes creuses avec une enveloppe graphitique mésoporeuse d'une épaisseur de couche de 20 nm à 50 nm et un noyau creux d'un diamètre de 60 nm à 440 nm, en particulier jusqu'à 560 nm, et le chargement de l'enveloppe graphitique mésoporeuse avec du métal actif au niveau catalytique, sélectionné parmi les Ti, V, Cr, Mn, Fe, Co, Ni, Cu, Zn, Al, Mo, Se, Sn, Pt, Ru, Pd, W, Ir, Os, Rh, Nb, Ta, Pb, Bi, Au, Ag, Sc, Y, leurs combinaisons et en particulier leurs alliages à base de métal précieux représentant 5 à 50 % en poids, en particulier 10 à 40 % en poids, du poids total des particules chargées de métal,
les particules graphitiques mésoporeuses pouvant être obtenues avec une charge de nanoparticules métalliques stables au frittage par un procédé dans lequel
- des particules comportant une structure de base mésoporeuse sont imprégnées avec un composé organique pouvant être graphitisé/carbonisé,
- les particules ainsi obtenues sont soumises à une étape de graphitisation à haute température, une structure graphitique étant constituée dans la structure de base poreuse,
- les particules graphitisées ainsi obtenues étant soumises à une étape d'élimination de la structure de base, une structure graphitique mésoporeuse étant obtenue,
- les particules graphitiques mésoporeuses ainsi obtenues étant imprégnées d'une solution de sel métallique actif au niveau catalytique, comme les Ti, V, Cr, Mn, Fe, Co, Ni, Cu, Zn, Al, Mo, Se, Sn, Pt, Ru, Pd, W, Ir, Os, Rh, Nb, Ta, Pb, Bi, Au, Ag, Sc, Y, et à leurs mélanges, le volume de la solution de sel métallique étant totalement absorbé dans les pores des particules graphitiques mésoporeuses,
- les particules graphitiques mésoporeuses ainsi obtenues étant soumises à une étape d'hydratation, les particules actives au niveau catalytique étant obtenues sur et/ou dans les pores des particules mésoporeuses, et
- les particules graphitiques mésoporeuses ainsi obtenues étant calcinées avec la charge de métal dans une plage de température de 600 °C à 1000 °C.

2. Utilisation de particules graphitiques mésoporeuses selon la revendication 1, dans laquelle les particules présentent une charge de l'enveloppe graphitique mésoporeuse avec du métal actif au niveau catalytique, sélectionné parmi le Pt avec au moins un élément parmi les Fe, Co, Ni, Cu, Ru, Pd, Au, Ag, Sn, Mo, Mn, Y, Sc.

3. Utilisation de particules graphitiques mésoporeuses avec une charge de nanoparticules métalliques stables au frittage selon la revendication 1 ou 2 comme partie intégrante d'électrodes dans des cellules électrochimiques.

4. Utilisation de particules graphitiques mésoporeuses avec une charge de nanoparticules métalliques stables au frittage selon la revendication 1 ou 2 comme catalyseur d'oxydation (anode) dans des cellules électrochimiques, en particulier des cellules à combustible.

5. Utilisation de particules graphitiques mésoporeuses avec une charge de nanoparticules métalliques stables au frittage selon la revendication 1 ou 2 comme catalyseur de réduction (cathode) de cellules électrochimiques (cathode), en particulier dans des cellules à combustible.

6. Utilisation selon une des revendications 1 à 5, dans laquelle l'utilisation électrochimique comprend l'utilisation comme élément de couches dans la structuration par couches d'une unité membrane-électrodes (MEA) d'une cellule à combustible, de cellules électrochimiques comme des cellules d'électrolyse, des reformeurs électrochimiques et comme partie intégrante de couches d'électrodes de batteries.
